# EUROPEAN PATENT APPLICATION

(11) **EP 4 510 488 A1**
(43) Date of publication of application: **19.02.2025**
(21) Application number: 23795066.2
(22) Date of filing: 14.04.2023
(51) Int. Cl.: H04L 5/00, H04W 72/04

(54) **COMMUNICATION METHOD AND APPARATUS**

(30) Priority: 29.04.2022 CN 202210468689
(71) Applicant: Huawei Technologies Co., Ltd., Shenzhen, Guangdong 518129 (CN)
(72) Inventor: LI, Ruijie, Shenzhen, Guangdong 518129 (CN); GUAN, Lei, Shenzhen, Guangdong 518129 (CN)
(74) Representative: Epping - Hermann - Fischer
(86) International application number: PCT/CN2023/088370
(87) International publication number: WO 2023/207633

(57) **Abstract**

A communication method and apparatus are provided. The method includes: A network device sends first information to a terminal device in a first frequency unit, the terminal device receives the first information from the network device in the first frequency unit, the first information indicates a first periodicity in which the network device sends common information in a second frequency unit, and the terminal device detects the common information in the second frequency unit based on the first periodicity. A detection periodicity of a common signal is flexibly configured, so that efficiency of detecting the common information by the terminal device can be improved, flexibility of initial access to the network device performed by the terminal device can be improved, and user experience can be improved.

## Description

This application claims priority to Chinese Patent Application No. 202210468689.5, filed with the China National Intellectual Property Administration on April 29, 2022 and entitled "COMMUNICATION METHOD AND APPARATUS", which is incorporated herein by reference in its entirety.

### TECHNICAL FIELD

Embodiments of this application relate to the field of wireless communication, and more specifically, to a communication method and a communication apparatus.

### BACKGROUND

With evolution of a communication system, more antennas are configured for a network device. Consequently, overall power consumption of the network device increases, and how to reduce energy consumption of the network device is increasingly concerned. One of main technical means for reducing the energy consumption of the network device is to reduce signal transmissions of the network device. For example, if the network device has no data to transmit, the network device may no longer transmit any signal, to reduce the energy consumption of the network device. However, even if the network device has no data to transmit, the network device always needs to periodically send some common information on each carrier in a periodicity of 20 ms. The common information, for example, a synchronization signal block (synchronization signal block, SSB) and a system information block 1 (system information block 1, SIB 1), may be used by a terminal device to identify the network device, so that the terminal device accesses a network. The sending periodicity of 20 ms cannot adapt to different transmission requirements, and flexibility of transmitting the common information between the terminal device and the network device is low.

### SUMMARY

This application provides a communication method and apparatus, to reduce energy consumption overheads caused by transmitting common information.

According to a first aspect, a communication method is provided. The method may be performed by a terminal device, or may be performed by a component (such as a chip or a circuit) of the terminal device. This is not limited in this application. For ease of description, the following uses an example in which the method is performed by the terminal device for description.

The method may include: receiving first information from a network device in a first frequency unit, where the first information indicates a first periodicity in which common information is transmitted; and detecting the common information in a second frequency unit based on the first periodicity.

With reference to the first aspect, in some implementations of the first aspect, the common information is for initial access to the network device.

In comparison to constantly detecting the common information based on a fixed periodicity, the terminal device detects the common information based on a periodicity configured by the network device based on the foregoing solution, so that flexibility of detecting the common information by the terminal device can be improved, and efficiency of accessing the network device by the terminal device can be improved. Correspondingly, the network device may configure, based on a requirement, a periodicity in which the common information is transmitted. This improves flexibility of sending the common information by the network device.

With reference to the first aspect, in some implementations of the first aspect, duration of the first periodicity is greater than 20 ms.

Based on the foregoing solution, a transmission periodicity of the common information is prolonged, so that a frequency of detecting the common information by the terminal device can be reduced. This reduces power consumption of the terminal device. Correspondingly, frequency at which the network device sends the common information can also be reduced. This reduces power consumption of the network device.

With reference to the first aspect, in some implementations of the first aspect, the first information further indicates a time window corresponding to the first periodicity, and the detecting the common information in a second frequency unit based on the first periodicity includes: detecting the common information in the second frequency unit based on the first periodicity in the time window corresponding to the first periodicity.

Based on the foregoing solution, one time window is configured, so that an access delay problem caused when the terminal device keeps detecting the common information can be avoided.

With reference to the first aspect, in some implementations of the first aspect, the first information further indicates an identifier of the second frequency unit; and the detecting the common information in a second frequency unit based on the first periodicity includes: detecting the common information in the second frequency unit based on the identifier of the second frequency unit and the first periodicity.

With reference to the first aspect, in some implementations of the first aspect, the first information further indicates a second periodicity in which the common information is transmitted.

**In** the foregoing solution, a plurality of transmission periodicities of the common information are configured, so that flexibility of transmitting the common information can be further improved. With reference to the first aspect, in some implementations of the first aspect, the method further includes: detecting the common information in the second frequency unit based on the second periodicity if the common information is not detected based on the first periodicity.

Based on the foregoing solution, the terminal device receives a plurality of sending periodicities of the common information from the network device, and the terminal device may adjust a detection periodicity of a common signal based on a requirement. This can improve efficiency of detecting the common information by the terminal device, improve flexibility of initial access to the network device performed by the terminal device, and improve user experience.

According to a second aspect, a communication method is provided. The method may be performed by a network device, or may be performed by a component (such as a chip or a circuit) of the network device. This is not limited in this application. For ease of description, the following uses an example in which the method is performed by the network device for description.

The method may include: sending first information to a terminal device in a first frequency unit, where the first information indicates a first periodicity in which common information is transmitted; and sending the common information in a second frequency unit based on the first periodicity.

With reference to the second aspect, in some implementations of the second aspect, the common information is used by the terminal device for initial access to the network device.

With reference to the second aspect, in some implementations of the second aspect, duration of the first periodicity is greater than 20 ms.

With reference to the second aspect, in some implementations of the second aspect, the first information further indicates at least one of the following: a time window corresponding to the first periodicity and an identifier of the second frequency unit.

With reference to the second aspect, in some implementations of the second aspect, the first information further indicates a second periodicity in which the common information is transmitted.

For beneficial effects of the second aspect and the possible designs, refer to related descriptions of the first aspect. Details are not described herein again.

According to a third aspect, a communication method is provided. The method may be performed by a terminal device, or may be performed by a component (such as a chip or a circuit) of the terminal device. This is not limited in this application. For ease of description, the following uses an example in which the method is performed by the terminal device for description.

The method may include: determining a third periodicity from at least two periodicities, where the at least two periodicities are transmission periodicities of common information; and detecting the common information in a third frequency unit based on the third periodicity.

With reference to the third aspect, in some implementations of the third aspect, the common information is for initial access to a network device.

Based on the foregoing solution, a plurality of transmission periodicities of the common information are preconfigured for the terminal device, so that the terminal device may determine, based on the plurality of sending periodicities, a periodicity for detecting a common signal. This can improve efficiency of detecting the common information by the terminal device, improve flexibility of initial access to the network device performed by the terminal device, and improve user experience.

With reference to the third aspect, in some implementations of the third aspect, each of the at least two periodicities is a transmission periodicity of the common information in the third frequency unit; or the at least two periodicities include a transmission periodicity of the common information in the third frequency unit and a transmission periodicity of the common information in a fourth frequency unit.

With reference to the third aspect, in some implementations of the third aspect, duration of the third periodicity is greater than 20 ms.

Based on the foregoing solution, the transmission periodicity of the common information is prolonged, so that the frequency of detecting the common information by the terminal device can be reduced. This reduces power consumption of the terminal device. Correspondingly, frequency at which the network device sends the common information can also be reduced. This reduces power consumption of the network device.

With reference to the third aspect, in some implementations of the third aspect, the detecting the common information in a third frequency unit based on the third periodicity includes: detecting the common information in the third frequency unit based on the third periodicity in a time window corresponding to the third periodicity.

With reference to the third aspect, in some implementations of the third aspect, the detecting the common information in a third frequency unit based on the third periodicity includes: detecting the common information in the third frequency unit based on an identifier of the third frequency unit and the third periodicity.

With reference to the third aspect, in some implementations of the third aspect, the at least two periodicities further include a fourth periodicity in which the common information is transmitted. **In** the foregoing solution, the plurality of transmission periodicities of the common information are configured, so that flexibility of transmitting the common information can be further improved. With reference to the third aspect, in some implementations of the third aspect, the method further includes: detecting the common information in the third frequency unit based on the fourth periodicity if the common information is not detected in the third frequency unit based on the third periodicity.

Based on the foregoing solution, the terminal device may adjust the detection periodicity of the common signal based on the plurality of transmission periodicities of the common information, so that the efficiency of detecting the common information by the terminal device can be improved, the flexibility of initial access to the network device performed by the terminal device can be improved, and user experience can be improved.

According to a fourth aspect, a communication method is provided. The method may be performed by a network device, or may be performed by a component (such as a chip or a circuit) of the network device. This is not limited in this application. For ease of description, the following uses an example in which the method is performed by the network device for description.

The method may include: determining a third periodicity from at least two periodicities, where the at least two periodicities are transmission periodicities of common information; and sending the common information to a terminal device in a third frequency unit based on the third periodicity. With reference to the fourth aspect, in some implementations of the fourth aspect, each of the at least two periodicities is a transmission periodicity of the common information in the third frequency unit; or the at least two periodicities include a transmission periodicity of the common information in the third frequency unit and a transmission periodicity of the common information in a fourth frequency unit.

With reference to the fourth aspect, in some implementations of the fourth aspect, the common information is used by the terminal device for initial access to the network device.

With reference to the fourth aspect, in some implementations of the fourth aspect, duration of the third periodicity is greater than 20 ms.

With reference to the fourth aspect, in some implementations of the fourth aspect, the sending the common information to a terminal device in a third frequency unit based on the third periodicity includes: sending the common information to the terminal device in the third frequency unit based on the third periodicity in a time window corresponding to the third periodicity.

With reference to the fourth aspect, in some implementations of the fourth aspect, the sending the common information to a terminal device in a third frequency unit based on the third periodicity includes: sending the common information to the terminal device in the third frequency unit based on an identifier of the third frequency unit and the third periodicity.

With reference to the fourth aspect, in some implementations of the fourth aspect, the at least two periodicities further include a fourth periodicity, and the fourth periodicity is for sending the common information in the third frequency unit.

For beneficial effects of the fourth aspect and the possible designs, refer to related descriptions of the third aspect. Details are not described herein again.

According to a fifth aspect, a communication method is provided. The method may be performed by a terminal device, or may be performed by a component (such as a chip or a circuit) of the terminal device. This is not limited in this application. For ease of description, the following uses an example in which the method is performed by the terminal device for description.

The method may include: determining a plurality of time windows, where the plurality of time windows are for detecting common information from a network device, and duration of each of the plurality of time windows is less than a transmission periodicity of the common information; and detecting the common information in a first time window in the time windows.

Based on the foregoing solution, the terminal device determines the plurality of time windows for detecting the common information, and the duration of each of the plurality of time windows is less than the sending periodicity of the common signal. Therefore, the terminal device does not need to continuously perform detection within duration of one sending periodicity. This reduces detection time of the terminal device, reduces energy consumption of blind detection performed by the terminal device, and can also improve efficiency of detecting the common signal by the terminal device.

With reference to the fifth aspect, in some implementations of the fifth aspect, the determining a plurality of time windows includes: determining start time of the plurality of time windows based on a fifth periodicity and a plurality of first moments, where duration of the fifth periodicity is equal to an interval between two adjacent time windows in the plurality of time windows, and the duration of the fifth periodicity is equal to an integer multiple of the transmission periodicity of the common information. The plurality of first moments are candidate moments at which the terminal device detects the common information, or the plurality of first moments are candidate moments at which the network device periodically sends the common information.

With reference to the fifth aspect, in some implementations of the fifth aspect, at least one of intervals between different time windows in the plurality of time windows is equal to an integer multiple of the transmission periodicity of the common information.

With reference to the fifth aspect, in some implementations of the fifth aspect, duration of the transmission periodicity is greater than 20 ms.

Based on the foregoing solution, the transmission periodicity of the common signal is prolonged, so that a frequency of detecting the common signal by the terminal device can be reduced. This reduces power consumption of the terminal device. Correspondingly, frequency at which the network device sends the common signal can also be reduced. This reduces power consumption of the network device.

With reference to the fifth aspect, in some implementations of the fifth aspect, the method further includes: detecting the common information at a second frequency domain position based on the plurality of time windows if the common information is not detected in the plurality of time windows and at a first frequency domain position.

Based on the foregoing solution, in the plurality of time windows, if the common information is not detected by the terminal device at one frequency domain position, the terminal device does not continue to detect the common signal at the first frequency domain position, and detects the common signal at another frequency domain position based on the plurality of time windows. This further reduces the detection time of the terminal device, reduces the energy consumption of blind detection performed by the terminal device, and can also improve the efficiency of detecting the common signal by the terminal device.

According to a sixth aspect, a communication method is provided. The method may be performed by a network device, or may be performed by a component (such as a chip or a circuit) of the network device. This is not limited in this application. For ease of description, the following uses an example in which the method is performed by the network device for description.

The method may include: determining a plurality of time windows, where the plurality of time windows are for sending common information to a terminal device, and duration of each of the plurality of time windows is less than a transmission periodicity of the common information; and sending the common information to the terminal device in a first time window in the time windows. With reference to the sixth aspect, in some implementations of the sixth aspect, the determining first time includes: determining start time of the plurality of time windows based on a fifth periodicity and a plurality of first moments, where duration of the fifth periodicity is equal to an interval between two adjacent time windows in the plurality of time windows, and the duration of the fifth periodicity is equal to an integer multiple of the transmission periodicity of the common information. The plurality of first moments are candidate moments at which the terminal device detects the common information, or the plurality of first moments are candidate moments at which the network device periodically sends the common information.

With reference to the sixth aspect, in some implementations of the sixth aspect, at least one of intervals between different time windows in the plurality of time windows is equal to an integer multiple of the transmission periodicity of the common information.

With reference to the sixth aspect, in some implementations of the sixth aspect, duration of the transmission periodicity is greater than 20 ms.

For beneficial effects of the sixth aspect and the possible designs, refer to related descriptions of the fifth aspect. Details are not described herein again.

According to a seventh aspect, a communication apparatus is provided. The apparatus includes: a receiving unit, configured to receive first information from a network device in a first frequency unit, where the first information indicates a first periodicity in which common information is transmitted; and a processing unit, configured to detect the common information in a second frequency unit based on the first periodicity.

With reference to the seventh aspect, in some implementations of the seventh aspect, the common information is for initial access to the network device.

With reference to the seventh aspect, in some implementations of the seventh aspect, duration of the first periodicity is greater than 20 ms.

With reference to the seventh aspect, in some implementations of the seventh aspect, the first information further indicates a time window corresponding to the first periodicity, and the processing unit is specifically configured to detect the common information in the second frequency unit based on the first periodicity in the time window corresponding to the first periodicity.

With reference to the seventh aspect, in some implementations of the seventh aspect, the first information further indicates an identifier of the second frequency unit; and the processing unit is specifically configured to detect the common information in the second frequency unit based on the identifier of the second frequency unit and the first periodicity.

With reference to the seventh aspect, in some implementations of the seventh aspect, the first information further indicates a second periodicity in which the common information is transmitted. With reference to the seventh aspect, in some implementations of the seventh aspect, the processing unit is further configured to detect the common information in the second frequency unit based on the second periodicity if the common information is not detected based on the first periodicity.

For beneficial effects of the seventh aspect and the possible designs, refer to related descriptions of the first aspect. Details are not described herein again.

According to an eighth aspect, a communication apparatus is provided. The apparatus includes: a transceiver unit, configured to send first information to a terminal device in a first frequency unit, where the first information indicates a first periodicity in which common information is transmitted; and a processing unit, configured to send the common information in a second frequency unit based on the first periodicity.

With reference to the eighth aspect, in some implementations of the eighth aspect, the common information is used by the terminal device for initial access to a network device.

With reference to the eighth aspect, in some implementations of the eighth aspect, duration of the first periodicity is greater than 20 ms.

With reference to the eighth aspect, in some implementations of the eighth aspect, the first information further indicates at least one of the following: a time window corresponding to the first periodicity and an identifier of the second frequency unit.

With reference to the eighth aspect, in some implementations of the eighth aspect, the first information further indicates a second periodicity in which the common information is transmitted. For beneficial effects of the eighth aspect and the possible designs, refer to related descriptions of the second aspect. Details are not described herein again.

According to a ninth aspect, a communication apparatus is provided. The apparatus may include: a processing unit, configured to determine a third periodicity from at least two periodicities, where the at least two periodicities are transmission periodicities of common information, where the processing unit is further configured to detect the common information in a third frequency unit based on the third periodicity.

With reference to the ninth aspect, in some implementations of the ninth aspect, the common information is for initial access to a network device.

With reference to the ninth aspect, in some implementations of the ninth aspect, each of the at least two periodicities is a transmission periodicity of the common information in the third frequency unit; or the at least two periodicities include a transmission periodicity of the common information in the third frequency unit and a transmission periodicity of the common information in a fourth frequency unit.

With reference to the ninth aspect, in some implementations of the ninth aspect, duration of the third periodicity is greater than 20 ms.

With reference to the ninth aspect, in some implementations of the ninth aspect, the processing unit is specifically configured to detect the common information in the third frequency unit based on the third periodicity in a time window corresponding to the third periodicity.

With reference to the ninth aspect, in some implementations of the ninth aspect, the processing unit is specifically configured to detect the common information in the third frequency unit based on an identifier of the third frequency unit and the third periodicity.

With reference to the ninth aspect, in some implementations of the ninth aspect, the at least two periodicities further include a fourth periodicity in which the common information is transmitted. With reference to the ninth aspect, in some implementations of the ninth aspect, the processing unit is further configured to detect the common information in the third frequency unit based on the fourth periodicity if the common information is not detected in the third frequency unit based on the third periodicity.

For beneficial effects of the ninth aspect and the possible designs, refer to related descriptions of the third aspect. Details are not described herein again.

According to a tenth aspect, a communication apparatus is provided. The apparatus may include: a processing unit, configured to determine a third periodicity from at least two periodicities, where the at least two periodicities are transmission periodicities of common information; and a transceiver unit, configured to send the common information to a terminal device in a third frequency unit based on the third periodicity.

With reference to the tenth aspect, in some implementations of the tenth aspect, each of the at least two periodicities is a transmission periodicity of the common information in the third frequency unit; or the at least two periodicities include a transmission periodicity of the common information in the third frequency unit and a transmission periodicity of the common information in a fourth frequency unit.

With reference to the tenth aspect, in some implementations of the tenth aspect, the common information is used by the terminal device for initial access to a network device.

With reference to the tenth aspect, in some implementations of the tenth aspect, duration of the third periodicity is greater than 20 ms.

With reference to the tenth aspect, in some implementations of the tenth aspect, the transceiver unit is specifically configured to send the common information to the terminal device in the third frequency unit based on the third periodicity in a time window corresponding to the third periodicity.

With reference to the tenth aspect, in some implementations of the tenth aspect, the transceiver unit is specifically configured to send the common information to the terminal device in the third frequency unit based on an identifier of the third frequency unit and the third periodicity.

With reference to the tenth aspect, in some implementations of the tenth aspect, the at least two periodicities further include a fourth periodicity, and the fourth periodicity is for sending the common information in the third frequency unit.

For beneficial effects of the tenth aspect and the possible designs, refer to related descriptions of the fourth aspect. Details are not described herein again.

According to an eleventh aspect, a communication apparatus is provided. The apparatus may include: a processing unit, configured to determine a plurality of time windows, where the plurality of time windows are for detecting common information from a network device, and duration of each of the plurality of time windows is less than a transmission periodicity of the common information, where the processing unit is further configured to detect the common information in a first time window in the time windows.

With reference to the eleventh aspect, in some implementations of the eleventh aspect, the processing unit is specifically configured to determine start time of the plurality of time windows based on a fifth periodicity and a plurality of first moments, where duration of the fifth periodicity is equal to an interval between two adjacent time windows in the plurality of time windows, and the duration of the fifth periodicity is equal to an integer multiple of the transmission periodicity of the common information. The plurality of first moments are candidate moments at which the terminal device detects the common information, or the plurality of first moments are candidate moments at which the network device periodically sends the common information.

With reference to the eleventh aspect, in some implementations of the eleventh aspect, at least one of intervals between different time windows in the plurality of time windows is equal to an integer multiple of the transmission periodicity of the common information.

With reference to the eleventh aspect, in some implementations of the eleventh aspect, duration of the transmission periodicity is greater than 20 ms.

With reference to the eleventh aspect, in some implementations of the eleventh aspect, the processing unit is specifically configured to detect the common information at a second frequency domain position based on the plurality of time windows if the common information is not detected in the plurality of time windows and at a first frequency domain position.

For beneficial effects of the eleventh aspect and the possible designs, refer to related descriptions of the fifth aspect. Details are not described herein again.

According to a twelfth aspect, a communication apparatus is provided. The apparatus may include: a processing unit, configured to determine a plurality of time windows, where the plurality of time windows are for sending common information to a terminal device, and duration of each of the plurality of time windows is less than a transmission periodicity of the common information; and a transceiver unit, configured to send the common information to the terminal device in a first time window in the time windows.

With reference to the twelfth aspect, in some implementations of the twelfth aspect, the processing unit is specifically configured to determine start time of the plurality of time windows based on a fifth periodicity and a plurality of first moments, where duration of the fifth periodicity is equal to an interval between two adjacent time windows in the plurality of time windows, and the duration of the fifth periodicity is equal to an integer multiple of the transmission periodicity of the common information. The plurality of first moments are candidate moments at which the terminal device detects the common information, or the plurality of first moments are candidate moments at which the network device periodically sends the common information.

With reference to the twelfth aspect, in some implementations of the twelfth aspect, at least one of intervals between different time windows in the plurality of time windows is equal to an integer multiple of the transmission periodicity of the common information.

With reference to the twelfth aspect, in some implementations of the twelfth aspect, duration of the transmission periodicity is greater than 20 ms.

For beneficial effects of the twelfth aspect and the possible designs, refer to related descriptions of the sixth aspect. Details are not described herein again.

In an implementation, the apparatus provided in the seventh aspect to the twelfth aspect is a communication device (for example, a network device or a terminal device). When the apparatus is the communication device, the communication unit may be a transceiver or an input/output interface; and the processing unit may be at least one processor. Optionally, the transceiver may be a transceiver circuit. Optionally, the input/output interface may be an input/output circuit.

In another implementation, the apparatus provided in the seventh aspect to the twelfth aspect is a chip, a chip system, or a circuit used in a communication device (for example, a network device or a terminal device). When the apparatus is the chip, the chip system, or the circuit used in the communication device, the communication unit may be an input/output interface, an interface circuit, an output circuit, an input circuit, a pin, a related circuit, or the like on the chip, the chip system, or the circuit; and the processing unit may be the at least one processor, a processing circuit, a logic circuit, or the like.

According to a thirteenth aspect, a communication apparatus is provided. The apparatus includes at least one processor, configured to execute a computer program or instructions stored in a memory, to perform the method in any possible implementation of the first aspect to the sixth aspect. Optionally, the apparatus further includes a memory, configured to store the computer program or the instructions. Optionally, the apparatus further includes a communication interface, and the processor reads, via the communication interface, the computer program or the instructions stored in the memory.

In an implementation, the apparatus is a communication device (for example, a network device or a terminal device).

In another implementation, the apparatus is a chip, a chip system, or a circuit used in the communication device (for example, the network device or the terminal device).

According to a fourteenth aspect, this application provides a processor, configured to perform the method provided in the first aspect to the sixth aspect.

Operations such as sending and obtaining/receiving related to the processor may be understood as operations such as output and receiving or input of the processor, or operations such as sending and receiving performed by a radio frequency circuit and an antenna, unless otherwise specified, or provided that the operations do not contradict actual functions or internal logic of the operations in related descriptions. This is not limited in this application.

According to a fifteenth aspect, a computer-readable storage medium is provided. The computer-readable storage medium stores program code to be executed by a device, and the program code is for performing the method in any possible implementation of the first aspect to the sixth aspect. According to a sixteenth aspect, a computer program product including instructions is provided. When the computer program product runs on a computer, the computer is enabled to perform the method in any possible implementation of the first aspect to the sixth aspect.

According to a seventeenth aspect, a communication system is provided, including the foregoing network device and the foregoing terminal device.

### BRIEF DESCRIPTION OF DRAWINGS

FIG. 1 is a diagram of an example of a system architecture to which this application is applicable;
FIG. 2 is a diagram of a communication method 100 according to this application;
FIG. 3 is a diagram of a communication method 200 according to this application;
FIG. 4 is a diagram of a communication method 300 according to this application;
FIG. 5 is a diagram of an example of a relationship between an interval between two adjacent first time windows and a sending periodicity of common information;
(a) and (b) in FIG. 6 are diagrams of another two examples of a relationship between an interval between two adjacent first time windows and a sending periodicity of common information;
FIG. 7 is a diagram of a communication apparatus 500 according to an embodiment of this application;
FIG. 8 is a diagram of another communication apparatus 600 according to an embodiment of this application; and
FIG. 9 is a diagram of a chip system 700 according to an embodiment of this application.

### DESCRIPTION OF EMBODIMENTS

The following describes technical solutions of embodiments of this application with reference to accompanying drawings.

The technical solutions provided in this application may be applied to various communication systems, for example, a 5th generation (5th generation, 5G) system or a new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application may be further applied to a future communication system, for example, a 6th generation (6th generation, 6G) mobile communication system. The technical solution provided in this application may be further applied to device-to-device (device-to-device, D2D) communication, vehicle-to-everything (vehicle-to-everything, V2X) communication, machine-to-machine (machine-to-machine, M2M) communication, machine-type communication (machine-type communication, MTC), an internet of things (internet of things, IoT) communication system, or other communication systems. A base station (base station) or a network device in this application may be an evolved NodeB (evolved NodeB, eNodeB), a transmission reception point (transmission reception point, TRP), a next generation NodeB (next generation NodeB, gNB) in a 5G mobile communication system, a next generation NodeB in a 6G mobile communication system, a base station in a future mobile communication system, an access node in a Wi-Fi system, or the like; or may be a module or a unit that completes some functions of a base station. The base station may be specifically configured to send downlink common information, a downlink control channel, a downlink data channel, a downlink measurement signal, and the like. The base station may be specifically configured to receive an uplink data channel, an uplink control channel, an uplink measurement signal, and the like that are sent by a terminal device. This application is mainly for a scenario in which the network device sends common information, namely, an SSB and a SIB 1.

A terminal (user equipment, UE) is a device having a wireless transceiver function, and may send a signal to the base station, or receive a signal from the base station. The UE may also be referred to as the terminal, a mobile station, a mobile terminal, or the like. The terminal may be widely used in various scenarios, for example, device-to-device (device-to-device, D2D) communication, vehicle to everything (vehicle to everything, V2X) communication, machine-type communication (machine-type communication, MTC), an internet of things (internet of things, IoT), virtual reality, augmented reality, industrial control, autonomous driving, telemedicine, a smart grid, smart furniture, smart office, smart wearable, smart transportation, and a smart city. The terminal may be a mobile phone, a tablet computer, a computer with a wireless transceiver function, a wearable device, a vehicle, an airplane, a ship, a robot, a mechanical arm, a smart home device, or the like. A specific technology and a specific device form that are used by the terminal are not limited in embodiments of this application. The UE may be specifically configured to receive/detect the downlink common information, the downlink control channel, and the downlink data channel that are sent by the network device. The UE may be specifically configured to send the uplink data channel, the uplink control channel, the uplink measurement signal, and the like. This application is mainly for a scenario in which reception/detection on the common information, namely, the SSB and the SIB 1, is performed.

In embodiments of this application, a function of the base station may be performed by a module (for example, a chip) in the base station, or may be performed by a control subsystem including the function of the base station. The control subsystem including the function of the base station herein may be a control center in the foregoing application scenarios, such as the smart grid, the industrial control, the smart transportation, and the smart city. A function of the terminal may be performed by a module (for example, a chip or a modem) in the terminal, or may be performed by an apparatus including the function of the terminal.

To facilitate understanding of embodiments of this application, the following describes some technical terms in embodiments of this application.

### 1. Common information

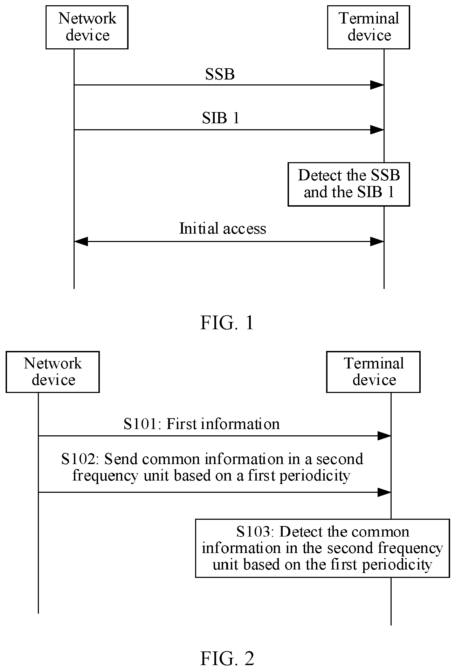

The common information may also be referred to as a common signal or non-dedicated information, and may be understood as information sent by one communication device to a plurality of communication devices. The communication system shown in FIG. 1 is used as an example. The common information may be understood as information sent by the network device to a plurality of terminal devices or one terminal device group in a cell, or may be understood as information not specifically sent by the network device to a terminal device or a terminal device group in a cell, or may be understood as information that can be jointly used by a plurality of terminal devices or one terminal device group in a cell. For example, the common information may be system information (system information block, SIB), a synchronization signal (synchronization signal block, SSB), or the like. In this application, periodicities in which the network device sends different common information may be the same or may be different. This is not limited in this application. For example, in embodiments of this application, a periodicity of the SSB and a periodicity of the SIB 1 may be the same or may be different. The following describes the SSB and the SIB 1 in detail.

### 2. SSB

The SSB includes two parts: a synchronization signal (synchronization signal, SS) and a physical broadcast channel (physical broadcast channel, PBCH). The SS further includes a primary synchronization signal (primary synchronization signal, PSS) and a secondary synchronization signal (secondary synchronization signal, SSS). Therefore, this may also be considered as that the SSB includes three parts. The SS and the PBCH are jointly for obtaining a cell identity (cell identity, cell ID), performing downlink timing (finding a reference point for downlink transmission, for example, a frame boundary), and obtaining a necessary system message (for example, a position of a time-frequency resource received on a physical downlink control channel (physical downlink control channel, PDCCH) corresponding to a SIB 1). An SSB of a 5G new radio (new radio, NR) mainly has two functions: (1) cell synchronization and master system message (master information block, MIB) obtaining; and (2) wide beam training on a base station side.

### SSB detection

Before the SSB is detected, the terminal device does not know a specific time-frequency resource position of the SSB. In other words, the terminal device needs to blindly detect a position of the SSB. However, because a cell bandwidth in NR is very wide, if the terminal device attempts to detect the SSB on each frequency, an access speed of the terminal device is very slow. Therefore, a synchronization raster (synchronization raster) is specially defined in an NR protocol. A series of frequency domain positions may be determined based on the synchronization raster, and the terminal device may detect the SSB only at these frequency domain positions. This improves efficiency of detecting the SSB by the terminal device. Optionally, in different bands, intervals between adjacent frequency domain positions determined based on the synchronization raster may be different. For example, the series of frequency domain positions may be 1200 kHz, 1.44 MHz, and 17.28 MHz.

In addition, during initial access, the terminal device assumes that a periodicity in which the network device sends the SSB is 20 ms. In other words, after waiting for 20 ms, if no SSB is detected by the terminal device at a frequency domain position determined based on a synchronization raster, the terminal device may continue to perform detection at another frequency domain position determined based on the synchronization raster.

### 3. SIB 1

The SIB 1 includes much information, for example, a parameter for determining whether a cell is suitable for cell selection, and time domain scheduling information of another SIB. A main function of the SIB 1 is to complete configuration on a primary cell (primary cell, PCell), so that a UE in an idle state monitors a paging message, or completes uplink timing synchronization through random access, to change to a connected state.

### SIB 1 detection

Through the foregoing SSB detection, a terminal device obtains a cell ID, completes downlink timing synchronization, obtains a MIB, and then learns of, through indication information in the MIB, a potential time-frequency position of downlink control information (downlink control information, DCI) for scheduling a SIB 1. In this way, a base station may schedule a physical downlink data channel (physical downlink shared channel, PDSCH) through the DCI, and the PDSCH carries the SIB 1. Correspondingly, the UE blindly detects the DCI at the potential time-frequency position. If the DCI is detected, the UE may receive the PDSCH on a specified time-frequency resource based on an indication of the DCI according to a specified method, to obtain the SIB 1.

In addition, the SIB 1 carries information required for random access, for example, a time-frequency resource used by the terminal device for random access. Therefore, even if the SSB is detected by the terminal device, if the SIB 1 is not received, the terminal device cannot perform random access, and can only wait until the SIB 1 is received.

### 4. Frequency unit

The frequency domain unit may be understood as a frequency domain range or a bandwidth area. The frequency domain unit may be understood as a measurement unit of a resource occupied, in frequency domain, by a resource that is used for information.

In embodiments of this application, the frequency unit may be a cell, a carrier, a band, a bandwidth part (bandwidth part, BWP), a subband, or the like. This is not limited. A unified description is provided herein, and details are not described below.

### 5. First carrier

The first carrier may also be referred to as a basic carrier, and may represent a carrier used for communication when data transmission does not need to be performed. For example, when a terminal device is in an idle state or an inactive (inactive) state, the terminal device may receive, on the first carrier, common information sent by a network device. For another example, compared with a second carrier, the first carrier has lower power consumption and/or a lower rate. The second carrier may also be referred to as an energy-saving carrier, and may represent a carrier used when data transmission needs to performed or when the network device needs to be accessed. For example, compared with the first carrier, the second carrier has higher power consumption and/or a higher rate. The first carrier and the second carrier may be carriers with a same frequency sent by two network devices (for example, the first carrier represents a cell under one base station, and the second carrier is another cell under the other base station). Alternatively, the first carrier and the second carrier may be two carriers with different frequencies sent by one network device (for example, the first carrier and the second carrier represent two cells under a base station). This is not limited.

It should be noted that, the first carrier in this application may be for carrying common information of the second carrier, so that the terminal device can obtain the common information of the second carrier from the first carrier.

With reference to FIG. 1, the following describes a diagram of an example of a system architecture to which this application is applicable by using an example in which the common information is the SSB and the SIB 1. To enable the terminal device to identify the network device, the network device sends some common information, for example, the SSB and the SIB 1. Correspondingly, the terminal device receives the common information from the network device. The SSB and the SIB 1 are detected by the terminal device. Then, the terminal device performs initial access to the network device based on indication information in the SSB and the SIB 1.

On each carrier, the terminal device detects the SSB in a periodicity of 20 ms. When detection time exceeds 20 ms, and no SSB is detected by the terminal device, the terminal device may consider that the network device does not send the SSB at a candidate frequency domain position. Therefore, the terminal device may adjust to another candidate frequency domain position to continue to detect the SSB.

For the SIB 1, the SIB 1 includes information required for random access, for example, a time-frequency resource used by the terminal device in a random access process. Therefore, even if the SSB is detected by the terminal device, if no SIB 1 is received by the terminal device, the terminal device cannot perform random access, and needs to continue to wait until the SIB 1 is received. If a periodicity in which the network device sends the SIB 1 is excessively long, a delay in accessing the network device by the terminal device may be excessively long, which affects experience of the terminal device. Therefore, the periodicity in which the network device sends the SIB 1 is short, and caused power overheads are also large.

In conclusion, to improve the experience of the terminal device as much as possible, the network device needs to periodically send the SSB and the SIB 1 on each carrier. The sending periodicity of 20 ms cannot adapt to different transmission requirements, and flexibility of transmitting the common information between the terminal device and the network device is low.

To resolve the foregoing problem, this application provides a solution. The following describes in detail the communication method provided in this application with reference to the accompanying drawings.

FIG. 2 is a diagram of a communication method 100 according to this application. In the method 100, a network device may flexibly configure one or more transmission periodicities of common information, and indicate the transmission periodicity of the common information to a terminal device.

S101: The network device sends first information to the terminal device in a first frequency unit, and correspondingly, the terminal device receives the first information from the network device in the first frequency unit. The first information indicates a first periodicity in which the common information is transmitted.

For example, the common information is used by the terminal device for initial access to the network device.

It should be understood that, when the terminal device is to perform initial access to the network device through a frequency unit (a second frequency unit), the terminal device cannot obtain, from the frequency unit, a transmission periodicity that is of the common information and that corresponds to the frequency unit, and may obtain, from another frequency unit (the first frequency unit), the transmission periodicity that is of the common information and that corresponds to the frequency unit.

For example, the common information is used by the terminal device to communicate with the network device through the second frequency domain unit.

For how the first information indicates the first periodicity, the following provides some optional examples.

Example 1: The first information may directly indicate duration of the first periodicity. The terminal device determines the first periodicity based on the duration indicated by the first information.

Example 2: The first information may indicate an index of the first periodicity, and the terminal device determines the first periodicity based on the index indicated by the first information. In this example, a correspondence between different transmission periodicities of the common information and indexes may be predefined or configured, and the terminal device determines the first periodicity based on the index indicated by the first information and the foregoing correspondence. An index of the transmission periodicity of the common information may be alternatively in another form or name, for example, may be alternatively an identifier of the transmission periodicity of the common signal. Table 1 is an example of a correspondence between different transmission periodicities and indexes. In Table 1, different index values correspond to different transmission periodicities of the common signal.

**Table 1**

| Index | Transmission periodicity of common information (ms) |
|---|---|
| 1 | 20 |
| 2 | 40 |
| 3 | 80 |

Example 3: The first indication information indicates different modes, and different modes correspond to different transmission periodicities of the common information. In this example, a correspondence between different modes of the common information and different modes may be predefined or configured, and the terminal device determines the first periodicity based on the mode indicated by the first information. Table 2 is an example of a correspondence between different modes and different periodicities. Because the transmission periodicity of the common signal is configured more flexibly, power consumption of the network device can be reduced, so that the mode in Table 2 may also be understood as an energy-saving mode. This is not limited in this application.

**Table 2**

| Mode | Transmission periodicity of common information (ms) |
|---|---|
| Mode 1 | 20 |
| Mode 2 | 40 |
| Mode 3 | 80 |

Optionally, the first information further indicates the second frequency unit. For example, the first information further indicates an identifier of the second frequency domain unit.

In an optional manner, sending periodicities of common information corresponding to different frequency units may be different. In this case, further optionally, the first information indicates the first periodicity and the identifier of the second frequency unit, and the terminal device may determine, based on the first information, that a periodicity in which the network device sends the common information in the second frequency unit is the first periodicity. That is, when indicating the first periodicity, the first information further indicates a frequency domain unit to which the first periodicity is applied. In other words, when indicating the first periodicity, the first information further indicates a frequency domain unit in which the terminal device detects the common signal based on the first periodicity.

Optionally, the first information may further indicate a transmission periodicity of another common signal and another frequency unit. For example, if the first information indicates the mode 3 and a fifth frequency unit, the terminal device may determine that a periodicity in which the network device sends the common information in the fifth frequency unit is 80 ms.

Optionally, the first information further indicates a time window corresponding to the first periodicity. The time window of the first periodicity may be understood as effective time of the first periodicity. In the effective time, the terminal device detects the common information based on the first periodicity, and outside the effective time, the terminal device does not need to detect the common information based on the first periodicity. Alternatively, the time window may be understood as follows: A transmission periodicity of the common information in the time window is the first periodicity, and a transmission periodicity of the common signal outside the time window is not the first periodicity, or the terminal device does not detect the common information outside the time window.

In an optional manner, sending periodicities of common information corresponding to different time windows are different. The first information indicates the time window corresponding to the first periodicity and the first periodicity, and correspondingly, the terminal device detects the common information in the second frequency unit based on the first periodicity in the time window corresponding to the first periodicity. For example, if a time window is 00:00 to 12:00, the time window corresponding to the first periodicity may be 00:00 to 12:00 every day. Alternatively, if a time window is 5 minutes to 45 minutes, the time window corresponding to the first periodicity is 5 minutes to 45 minutes after the terminal device receives the first information, or the time window corresponding to the first periodicity may be alternatively indicated in another form. This is not limited in this application.

In a possible embodiment, before step S101, the communication method 100 further includes step S100: The network device determines the first periodicity.

There may be the following several implementations about how the network device determines the first periodicity.

Manner 1: The network device determines the first periodicity based on load of a current network. For example, when the load of the network is large, the first periodicity is short; or when the load of the network is small, the first periodicity is long. According to the method, a length of the first periodicity can be adaptively adjusted based on complexity of the network device.

Manner 2: The network device can determine the first periodicity based on a type of data in a network. For example, when the data transmitted in the network has a high requirement on a delay, the first periodicity determined by the network device is short, which helps the terminal device quickly access the network device. When the data transmitted in the network has a low requirement on the delay, the first periodicity determined by the network device is long.

It should be understood that, in comparison to constantly detecting the common information based on a fixed periodicity, the terminal device detects the common information based on a periodicity configured by the network device, so that flexibility of detecting the common information by the terminal device can be improved, and efficiency of accessing the network device by the terminal device can be improved. Correspondingly, the network device may configure, based on a requirement, a periodicity in which the common information is transmitted. This improves flexibility of sending the common information by the network device. In addition, the sending periodicity of the common information is prolonged, so that signaling overheads of the network device can be reduced, and energy consumption of the network device can be reduced.

S102: The network device sends the common information to the terminal device in the second frequency unit based on the first periodicity.

Specifically, in step S101, the network device indicates the transmission periodicity of the common information to the terminal device through the first information. Correspondingly, the network device may also periodically send the common signal in the second frequency domain unit by using the first periodicity as the sending periodicity, so that the terminal device identifies the network device in the second frequency domain unit to access the network.

S103: The terminal device detects the common information in the second frequency unit based on the first periodicity.

For example, the first periodicity may also be understood as longest time of detection performed by the terminal device at a candidate frequency domain position that is of a common signal and that is included in the second frequency domain unit. An example in which a first frequency domain position is one candidate frequency domain position of the common signal is used. The terminal device may determine, based on the first periodicity, longest time to be taken for detecting the common information at the first frequency domain position included in the second frequency unit. When time taken by the terminal device to detect the common information at the first frequency domain position is greater than or equal to the duration of the first periodicity, and no common information is detected by the terminal device, the terminal device selects a second frequency domain position to continue to perform detection. The second frequency domain position is a candidate frequency domain position that is in the candidate frequency domain positions and that is different from the first frequency domain position. For example, the first frequency domain position is a frequency domain position determined based on a synchronization raster, and the second frequency domain position is another frequency domain position determined based on the synchronization raster. Alternatively, for example, the first periodicity may be understood as a periodicity in which the terminal device considers that the network device sends the common signal.

In embodiments of this application, the network device flexibly adjusts the transmission periodicity of the common information, so that signaling overheads can be controlled and energy consumption can be adjusted. The network device indicates the transmission periodicity of the common information to the terminal device, so that the terminal device can detect the common information based on the periodicity indicated by the network device. This improves efficiency of detecting the common information by the terminal device, reduces a delay of accessing the network device by the terminal device, can improve flexibility of initial access to the network device performed by the terminal device, and improves user experience.

Further, when the network device adjusts the transmission periodicity of the common information, transmission periodicities of the common information corresponding to different frequency units are allowed to be different. The transmission periodicity of the common information may be prolonged, to reduce overheads of the common information, and reduce energy consumption of the network device. Therefore, in this solution, the energy consumption of the network device can be reduced without affecting user experience.

Example 3: Optionally, when indicating the first periodicity, the first information may further indicate another periodicity in which the common signal is transmitted. In other words, the first information indicates a plurality of transmission periodicities of the common signal. For example, the first information indicates the first periodicity and a second periodicity in which the common information is transmitted. Specifically, the first information indicates one periodicity set, and the periodicity set includes the first periodicity and the second periodicity. For another example, the first information may indicate a plurality of indexes of transmission periodicities of the common information, and the plurality of indexes include an index of the first periodicity and an index of the second periodicity. For another example, the first information indicates two modes in which the common information is transmitted, and the two modes correspond to the first periodicity and the second periodicity. In an optional manner, different transmission periodicities of the common signal correspond to different time windows. For example, the first periodicity is 80 ms, the second periodicity is 40 ms, a time window corresponding to the first periodicity is 00:00 to 8:00 every day, and a time window corresponding to the second periodicity is 08:00 to 18:00 every day. Optionally, the first information may further indicate time windows corresponding to different transmission periodicities of the common information. For example, the first information indicates the first periodicity, the second periodicity, and the time windows respectively corresponding to the first periodicity and the second periodicity.

In another optional manner, different transmission periodicities of the common signal correspond to different priorities. For example, if a priority of the first periodicity is higher than that of the second periodicity, the terminal device detects the common information in the second frequency unit based on the first periodicity with the higher priority. If the common information is not detected based on the first periodicity, the terminal device detects the common information in the second frequency unit based on the second periodicity. For example, the first periodicity is 20 ms, the second periodicity is 40 ms, and the common signal is an SSB. The terminal device detects the SSB in the second frequency unit based on 20 ms. If no SSB is detected by the terminal device at a plurality of frequency domain positions determined based on the synchronization raster in the second frequency unit, the terminal device detects the SSB based on 40 ms, and continues to detect the SSB at one or more frequency domain positions determined based on the synchronization raster in the second frequency unit. Optionally, the first information may further indicate priorities corresponding to different transmission periodicities of the common information. For example, the first information indicates the first periodicity, the second periodicity, and priorities respectively corresponding to the first periodicity and the second periodicity.

Optionally, the method 200 further includes: detecting the common information in the second frequency unit based on the second periodicity if the common information is not detected based on the first periodicity. Corresponding to a manner in which the first information indicates the first periodicity and the second periodicity, if the common information is not detected in the second frequency unit based on the first periodicity, it may be determined, based on the priorities or a time window corresponding to current time, to detect the common information in the second frequency unit based on the second periodicity.

In the foregoing solution, the network device indicates, to the terminal device, the plurality of transmission periodicities of the common information and the time windows and/or the priorities corresponding to the plurality of transmission periodicities. This further improves flexibility of adjusting the transmission periodicity of the common information by the network device, further improves the efficiency of detecting the common information by the terminal device, improves the flexibility of initial access to the network device performed by the terminal device, and improves user experience.

In the foregoing solution, the time window is configured, and the terminal device detects the common information in a more accurate time window, so that the efficiency of detecting the common information by the terminal device can be improved, and the delay of accessing the network device by the terminal device can be reduced.

Example 4: Optionally, third information may be further transmitted on a first carrier used to carry the first information, and the third information may indicate, to the terminal device, a transmission periodicity of the common information in one or more frequency units other than the second frequency unit. For example, the third information may indicate a transmission periodicity of the common information in the first frequency unit to the terminal device, or the third information may indicate a transmission periodicity of the common information in a third frequency unit to the terminal device. In other words, transmission periodicities of the common information in different frequency units may be different.

For example, the first information and the third information on the first carrier may indicate transmission periodicities of the common information corresponding to different frequency units. For example, the first information may include a correspondence between an identifier of the second frequency unit and the first periodicity, and the third information may include a correspondence between an identifier of the third frequency unit and a sixth periodicity. Similar to the foregoing case in which the terminal device determines, based on the first information, that the transmission periodicity of the common information in the second frequency unit is the first periodicity, the terminal device may determine, based on the third information, that the transmission periodicity of the common information in the third frequency unit is the sixth periodicity.

In the foregoing solution, the network device can implement different transmission periodicities of the common information corresponding to different frequency units. This further improves flexibility of adjusting the transmission periodicity of the common information by the network device. The terminal device may obtain, from the network device through the first carrier, periodicities corresponding to a plurality of frequency units, so that overheads of detection performed by the terminal device can be reduced, and efficiency of initial access can also be improved.

For another example, detection on the common information is performed in the second frequency unit based on an identifier of the second frequency unit and the first periodicity. For example, there is a correspondence between a plurality of periodicities and a plurality of frequency units, and the network device sends the identifier of the second frequency unit when sending the first periodicity, so that the terminal device determines to detect the common information in the second frequency unit based on the first periodicity. For another example, the first information may further indicate a correspondence between the identifier of the second frequency unit and a mode, and the correspondence indicates to detect the common information in the second frequency unit based on the mode. The terminal device can detect the common information in a more accurate time window or frequency unit, so that efficiency of detecting the common information by the terminal device can be improved, and a delay of accessing the network device by the terminal device can be reduced.

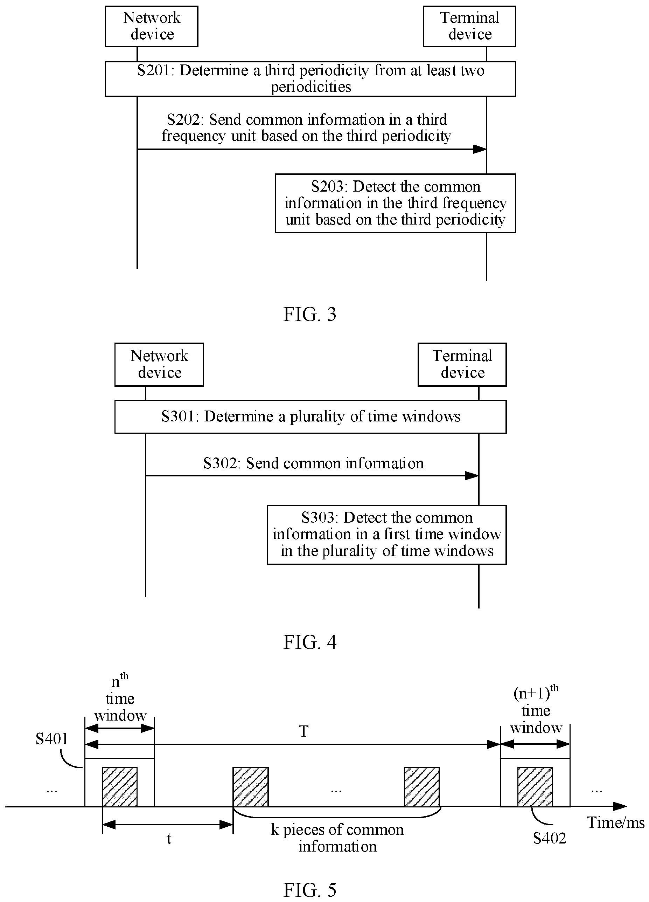

FIG. 3 is a diagram of a communication method 200 according to this application. A difference between the method 200 and the method 100 lies in that in the method 100, a terminal device determines a first periodicity based on first information from a network device, but in the method 200, the terminal device determines the first periodicity based on preconfigured information.

S201: The terminal device determines a third periodicity from at least two periodicities, and the network device determines the third periodicity from the at least two periodicities, where the at least two periodicities are transmission periodicities of common information.

For example, the common information is used by the terminal device for initial access to the network device. For example, the at least two periodicities herein may be preconfigured in the terminal device and the network device.

It should be understood that, when the terminal device is to perform initial access to the network device through a frequency unit, the terminal device cannot obtain, from the frequency unit, a transmission periodicity of common information corresponding to the frequency unit. In the method 200, the terminal device obtains, based on the preconfigured information, the transmission periodicity that is of the common information and that corresponds to the frequency unit.

The at least two periodicities preconfigured in the terminal device and the network device may correspond to one frequency unit, or may correspond to a plurality of frequency units. The following provides two examples.

Example 1: The at least two periodicities preconfigured in the terminal device and the network device correspond to one frequency unit. For example, each of the at least two periodicities is a transmission periodicity of the common information in a third frequency unit. It may be understood that, the at least two transmission periodicities of the common information in the third frequency unit are preconfigured in the terminal device and the network device. For example, the at least two transmission periodicities include a third periodicity and a fourth periodicity, and the fourth periodicity may be one or more transmission periodicities of the common information in the third frequency unit.

For example, the at least two periodicities correspond to different priorities, and the third periodicity has a highest priority in the at least two periodicities. The terminal device determines the third periodicity from the at least two periodicities based on the priority. For another example, the at least two periodicities correspond to different time windows, and the terminal device determines the third periodicity from the at least two periodicities based on a case in which a time window corresponding to the third periodicity includes current time.

Optionally, the method 200 may further include: detecting the common information in the third frequency unit based on the fourth periodicity if the common information is not detected based on the third periodicity. For details, refer to descriptions corresponding to Example 3 in the method 100. A difference lies in that the third periodicity is replaced with the first periodicity, the second periodicity is replaced with the fourth periodicity, and the second frequency unit is replaced with the third frequency unit.

Similarly, for a manner in which the network device determines the third periodicity, refer to a manner in which the terminal device determines the third periodicity.

Example 2: The at least two periodicities preconfigured in the terminal device and the network device may correspond to the plurality of frequency units. For example, the at least two periodicities include transmission periodicities of the common information in a third frequency unit and a fourth frequency unit, where the fourth frequency unit is one or more frequency units other than the third frequency unit. It may be understood as that, the network device may use different transmission periodicities of the common information for different frequency units, and the terminal device may also determine transmission periodicities of the common information based on different frequency units.

Optionally, a correspondence between the frequency unit and the transmission periodicity of the common information may be preconfigured. For example, a correspondence shown in Table 3 is preconfigured for the terminal device and the network device. If the terminal device needs to detect the common signal in the third frequency unit based on the third periodicity, it may be determined, based on Table 3, that duration of the third periodicity is 20 ms. Alternatively, a correspondence between a 1^{st} column and a 3^{rd} column in Table 3 may be further preconfigured for the network device and the terminal device, or a correspondence between a 1^{st} column and a 2^{nd} column in Table 3 and Table 1 may be further separately preconfigured for the network device and the terminal device, or a correspondence may be in another form. This is not limited in this application.

**Table 3**

| Frequency unit | Transmission periodicity of common information (ms) |
|---|---|
| Third frequency unit | 20 |
| Fourth frequency unit | 40 |

S202: The network device sends the common information to the terminal device in the third frequency unit based on the third periodicity.

Specifically, in step S201, both the network device and the terminal device determine that the transmission periodicity of the common information in the third frequency unit is the third periodicity. In this case, the network device periodically sends the common signal in the third frequency unit by using the third periodicity as a sending periodicity, so that the terminal device identifies the network device in the third frequency domain unit to access a network.

S203: The terminal device detects the common information in the third frequency unit based on the third periodicity.

For details, refer to descriptions corresponding to S103 in the method 100. A difference lies in that the first periodicity is replaced with the third periodicity, and the second frequency unit is replaced with the third frequency unit.

In embodiments of this application, a plurality of transmission periodicities of the common information are preconfigured for the terminal device, so that the terminal device may determine, based on the plurality of sending periodicities, a periodicity for detecting the common signal. This can improve efficiency of detecting the common information by the terminal device, improve flexibility of initial access to the network device performed by the terminal device, and improve user experience. In addition, the transmission periodicity of the common information is prolonged, so that frequency of detecting the common information by the terminal device can be reduced. This reduces power consumption of the terminal device. Correspondingly, frequency at which the network device sends the common information can also be reduced. This reduces power consumption of the network device.

FIG. 4 is a diagram of a communication method 300 according to this application. In the method 300, a terminal device and a network device determine first time, the network device sends common information in the first time, and the terminal device detects the common information in the first time.

S301: The terminal device and the network device determine one or more time windows, where the plurality of time windows are used by the terminal device to detect the common information from the network device, the one or more time windows are used by the network device to send the common information to the terminal device, and duration of each of the one or more time windows is less than a transmission periodicity of the common information.

The following uses an example in which the terminal device and the network device determine the plurality of time windows for description.

The plurality of time windows are used by the terminal device to detect the common information from the network device, and the plurality of time windows are used by the network device to send the common information to the terminal device. It may be understood that, regardless of how the plurality of time windows are determined and regardless of a periodicity in which the network device discovers the common information, it needs to be determined that the network device sends the common information in the plurality of time windows, and the terminal device also detects the common information in the plurality of time windows. In other words, in the method 300, the time windows of the network device in which the common information is transmitted are aligned with the time windows of the terminal device in which the common information is transmitted. When it is determined that the network device sends the common information in the plurality of time windows, the transmission periodicity of the common information can be flexibly adjusted. When it is determined that the terminal device detects the common information in the plurality of time windows, the periodicity in which the network device sends the common information may not need to be considered either.

The duration of each time window is less than the transmission periodicity of the common information. Therefore, it may be understood that, in comparison to a case in which the terminal device needs to continuously perform detection for duration of one transmission periodicity at one resource position before determining that no common information is detected, in the method 300, if the common information is not detected by the terminal device at a frequency domain position A in the plurality of time windows, the terminal device may consider that the network device does not send the common information at the frequency domain position A, and the terminal device may immediately continue to perform detection at another frequency domain position, rather than continuously perform detection for duration of one transmission periodicity at the frequency domain position A before detecting the common information at the another frequency domain position, which can reduce time for detecting the common information by the terminal device, and reduce a communication delay.

Optionally, both the frequency domain position A and the another frequency domain position are candidate frequency domain configurations determined based on a synchronization raster.

How the terminal device and the network device determine the plurality of time windows includes but is not limited to the following several manners.

Manner 1: The network device and the terminal device determine the plurality of time windows in a predefined manner. The following describes how to determine the time window in the predefined manner by using an example in which the network device and the terminal device determine a first time window.

For example, the network device and the terminal device may complete time synchronization based on a global navigation satellite system (global navigation satellite system, GNSS). Specifically, if the network device and the terminal device perform time synchronization based on the GNSS, it may be predefined that one of the plurality of time windows is 10 ms from 00:00:00:000 to 00:00:00:010. In this case, the terminal device and the network device may determine the time window, namely, 10 ms from 00:00:00:000 to 00:00:00:010, based on the GNSS. Similarly, a manner of determining another time window in the plurality of time windows is similar to this manner.

Manner 2: After determining the plurality of time windows, the network device sends the plurality of time windows to the terminal device through signaling. In other words, the first time window is configured by the network device and is indicated to the terminal device.

For example, the network device may determine the plurality of time windows based on the transmission periodicity of the common signal, and indicate the determined plurality of time windows to the terminal device through the signaling. For example, a relationship between the transmission periodicity of the common signal and the time window may be predefined in a protocol, and transmission periodicities of different common signals correspond to different time windows. The network device sends the transmission periodicity of the common information to the terminal device through first information. The terminal device learns of the transmission periodicity of the common information, and determines the plurality of time windows.

Example 1: At least one of intervals between different time windows in the plurality of time windows is equal to an integer multiple of the transmission periodicity of the common information. In other words, at least one of intervals between adjacent time windows is equal to an integer multiple of the transmission periodicity of the common information.

For example, T=(k+1)t, where T is duration of an interval between two adjacent time windows, t is the transmission periodicity of the common information, k is a quantity of pieces of common information sent by the network device at the interval between the two adjacent time windows, k≥0, k is an integer, and t>0.

The following describes in detail a relationship between the interval between the two adjacent time windows and the transmission periodicity of the common information by using FIG. 5 as an example. As shown in FIG. 5, the horizontal axis represents time domain, and time increases from left to right. A length between horizontal coordinates may be understood as the duration. A block S401 is an n^{th} time window, and duration occupied by S401 may be understood as duration of the time window. In FIG. 5, the n^{th} time window and an (n+1)^{th} time window are used as examples for description, where n is a positive integer. A shadow box S402 is the common information, and duration occupied by S402 may be understood as time actually taken by the network device to send the common information. An interval between the n^{th} time window and the (n+1)^{th} time window is T. Within one T, the network device may send k pieces of common information. Specifically, when k=0, T=t; or when k>0, T=(k+1)t. It should be noted that, the duration occupied by S402 may be less than or equal to the duration occupied by S401. In FIG. 5, S401 is merely an example, and does not limit the duration of S401 and the duration of S402.

Example 2: The plurality of time windows are periodically arranged, or intervals between every two adjacent time windows are equal to each other.

The network device and the terminal device determine start time of the plurality of time windows based on a fifth periodicity and a plurality of first moments, where duration of the fifth periodicity is equal to an interval between two adjacent time windows in the plurality of time windows, and the duration of the fifth periodicity is equal to an integer multiple of the transmission periodicity of the common information. The plurality of first moments are candidate moments at which the terminal device detects the common information, or the plurality of first moments are candidate moments at which the network device periodically sends the common information.

For example, the network device and the terminal device may determine start time Tₙ of the plurality of time windows based on a first moment T₀ and the transmission periodicity t of the common information. For example, Tₙ=T₀+mT, where m≥0, m is an integer, and T is duration of an interval between adjacent time windows. T may be preconfigured, or T may be determined with reference to the description in Example 1. The first moment T₀ herein may be a start moment of time taken by the network device to periodically send the common information. In this case, T₀ may be preconfigured, or may be received from the network device. Alternatively, the first moment T₀ may be a candidate moment at which the network device sends the common information, for example, may be start time of any S402 in FIG. 5. In this case, T₀ may be preconfigured, or may be determined by the terminal device based on start time at which the network device sends the common information and the transmission periodicity of the common information.

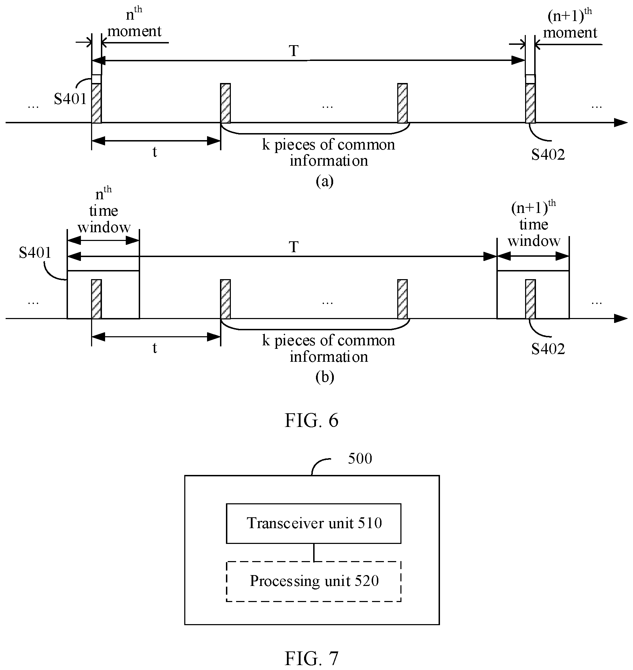

It should be noted that, FIG. 5 is described by using an example in which both S401 and S402 are time periods. However, this is not limited in FIG. 5. For example, as shown in (b) in FIG. 6, S402 may occupy one moment in the time window.

S302: The network device sends the common information to the terminal device.

For example, the network device sends the common information in the plurality of time windows. Specifically, in S301, both the network device and the terminal device determine the plurality of time windows. In this case, when sending the common information, the network device needs to ensure that the common information is sent in the plurality of time windows, so that the terminal device can identify the network device in the plurality of time windows.

Optionally, the periodicity in which the network device sends the common information is greater than 20 ms. Specifically, the periodicity in which the network device sends the common information may be determined in a manner in the method 100 or the method 200.

S303: The terminal device detects the common information in the first time window in the plurality of time windows.

It should be understood that, in S301, the terminal device determines that the plurality of time windows are for detecting the common information, and in S303, the terminal device may select one or more time windows (referred to as the first time window herein) from the plurality of time windows to identify the network device and access a network.

For example, the terminal device may detect the common information at the frequency domain position A in the first time window. If the common information is not detected, the terminal device may consider that the network device does not send the common information at the frequency domain position A, and immediately continues to perform detection at the another frequency domain position. This can reduce detection time of the terminal device. For example, when duration of each time window is equal, the duration of each time window is 5 ms, and duration of the first time window is also 5 ms. Even if the terminal device determines that the transmission periodicity of the common information is 40 ms, the terminal device does not continuously detect the common information for 40 ms at the frequency domain position A, but detects the common information only within 5 ms of the first time window.

For example, both the frequency domain position A and the another frequency domain position are the candidate frequency domain configurations determined based on the synchronization raster.

It should be further noted that, the foregoing describes the communication method 400 provided in this application by using one or more time windows as an example. In another possible implementation, the time window in the method 400 may be replaced with one moment.

For example, a manner in which the network device and the terminal device determine the plurality of time windows may be replaced with a manner in which the network device and the terminal device determine a plurality of moments. For example, the network device and the terminal device may complete time synchronization based on a global navigation satellite system (global navigation satellite system, GNSS), and determine the plurality of moments in a predefined manner. Specifically, if the network device and the terminal device perform time synchronization based on the GNSS, it is predefined that one of the plurality of moments is 00:00:00. In this case, the terminal device and the network device may determine the moment, namely, 00:00:00, based on the GNSS. Similarly, a manner of determining another moment in the plurality of moments is similar to this manner.

For another example, in Example 1 and Example 2, the plurality of time windows are replaced with the plurality of moments, or a start moment of the time window may be understood as a moment in replacement of the time window. For example, as shown in (a) in FIG. 6, when the time window is replaced with one moment, the network device may send the common information at the moment, and the terminal device may also detect the common information at the moment.

In embodiments of this application, in the plurality of time windows, the network device may send the common information, the terminal device may detect the common information, and the duration of each of the plurality of time windows is less than the transmission periodicity of the common information. Therefore, the terminal device can determine whether the common information can be detected at a current frequency domain position, without continuously performing detection within duration of one transmission periodicity. This reduces the detection time of the terminal device, reduces energy consumption of blind detection performed by the terminal device, and can also improve efficiency of detecting the common information by the terminal device.

Further, when the network device adjusts the transmission periodicity of the common information, transmission periodicities of common information corresponding to different frequency units are allowed to be different. The transmission periodicity of the common information may be prolonged, to reduce overheads of the common information, and reduce energy consumption of the network device. Therefore, in this solution, the energy consumption of the network device can be reduced without affecting user experience.

FIG. 7 is a diagram of a communication apparatus 500 according to an embodiment of this application. The apparatus 500 includes a transceiver unit 510, and the transceiver unit 510 may be configured to implement a corresponding communication function. The transceiver unit 510 may be further referred to as a communication interface or a communication unit.

Optionally, the apparatus 500 may further include a processing unit 520, and the processing unit 520 may be configured to perform data processing.

Optionally, the apparatus 500 further includes a storage unit. The storage unit may be configured to store instructions and/or data. The processing unit 520 may read the instructions and/or the data in the storage unit, to enable the apparatus to implement actions performed by the communication device (for example, the terminal device or the network device) in the foregoing method embodiments.

The apparatus 500 may be configured to perform actions performed by the communication device (for example, the terminal device or the network device) in the foregoing method embodiments. In this case, the apparatus 500 may be a component of the communication device (for example, the terminal device or the network device). The transceiver unit 510 is configured to perform receiving and sending-related operations on a communication device (for example, the terminal device or the network device) side in the foregoing method embodiments, and the processing unit 520 is configured to perform processing-related operations on the communication device (for example, the terminal device or the network device) side in the foregoing method embodiments.

In a design, the apparatus 500 is configured to perform actions performed by the terminal device in the foregoing method embodiments.

In a possible implementation, the transceiver unit 510 is configured to receive first information from the network device in a first frequency unit, where the first information indicates a first periodicity, and the first periodicity is used to detect common information in a second frequency unit; and detect the common information in the second frequency unit based on the first periodicity. The processing unit 520 is further configured to detect the common information in the second frequency unit based on the first periodicity.

Optionally, the first information further indicates a time window corresponding to the first periodicity, and the processing unit 520 is specifically configured to detect the common information in the second frequency unit based on the first periodicity in the time window corresponding to the first periodicity.

Optionally, the transceiver unit 510 is further configured to detect the common information in the second frequency unit based on the second periodicity if the common information is not detected based on the first periodicity.

Optionally, the first information further indicates a time window corresponding to the first periodicity, and the processing unit 520 is specifically configured to detect the common information in the second frequency unit based on the first periodicity in the time window corresponding to the first periodicity.

Optionally, the first information further indicates an identifier of the second frequency unit; and the processing unit 520 is specifically configured to detect the common information in the second frequency unit based on the identifier of the second frequency unit and the first periodicity. Optionally, the processing unit 520 is further configured to detect the common information in the second frequency unit based on the second periodicity if the common information is not detected based on the first periodicity.

In another possible implementation, the processing module 520 is configured to determine a plurality of time windows, where the plurality of time windows are for detecting common information from a network device, and duration of each of the plurality of time windows is less than a transmission periodicity of the common information; and the processing module 520 is further configured to detect the common information in a first time window in the time windows. Optionally, the processing module 520 is specifically configured to determine start time of the plurality of time windows based on a fifth periodicity and a plurality of first moments, where duration of the fifth periodicity is equal to an interval between two adjacent time windows in the plurality of time windows, and the duration of the fifth periodicity is equal to an integer multiple of the transmission periodicity of the common information. The plurality of first moments are candidate moments at which the terminal device detects the common information, or the plurality of first moments are candidate moments at which the network device periodically sends the common information.

Optionally, the processing module 520 is further configured to detect the common information at a second frequency domain position based on the plurality of time windows if the common information is not detected in the plurality of time windows and at a first frequency domain position.

The apparatus 500 may implement steps or procedures performed by the terminal device in the method embodiments according to embodiments of this application. The apparatus 500 may include a unit configured to perform the method performed by the terminal device in the embodiment shown in FIG. 2, FIG. 3, or FIG. 4.

It should be understood that, a specific process in which each unit performs the foregoing corresponding steps has been described in detail in the foregoing method embodiments. For brevity, details are not described herein again.

In another design, the apparatus 500 is configured to perform actions performed by the network device in the foregoing method embodiments.

In a possible implementation, the transceiver unit 510 is configured to send first information to a terminal device in a first frequency unit, where the first information indicates a first periodicity in which common information is transmitted; and the transceiver unit 510 is further configured to send the common information in a second frequency unit based on the first periodicity.

In another possible implementation, the processing unit 520 is configured to determine a third periodicity from at least two periodicities, where the at least two periodicities are transmission periodicities of common information; and the transceiver unit 510 is configured to send the common information to a terminal device in a third frequency unit based on the third periodicity. Optionally, the transceiver unit 510 is specifically configured to send the common information to the terminal device in the third frequency unit based on the third periodicity in a time window corresponding to the third periodicity.

Optionally, the transceiver unit 510 is specifically configured to send the common information to the terminal device in the third frequency unit based on an identifier of the third frequency unit and the third periodicity.

In another possible implementation, the processing unit 520 is configured to determine a plurality of time windows, where the plurality of time windows are for sending common information to a terminal device, and duration of each of the plurality of time windows is less than a transmission periodicity of the common information; and the transceiver unit 510 is configured to send the common information to the terminal device in a first time window in the time windows.

Optionally, the processing unit 520 is specifically configured to determine start time of the plurality of time windows based on a fifth periodicity and a plurality of first moments, where duration of the fifth periodicity is equal to an interval between two adjacent time windows in the plurality of time windows, and the duration of the fifth periodicity is equal to an integer multiple of the transmission periodicity of the common information. The plurality of first moments are candidate moments at which the terminal device detects the common information, or the plurality of first moments are candidate moments at which the network device periodically sends the common information.

The apparatus 500 may implement steps or procedures performed by the network device in the method embodiment according to embodiments of this application. The apparatus 500 may include a unit configured to perform the method performed by the network device in the embodiment shown in FIG. 2, FIG. 3, or FIG. 4.

It should be understood that, a specific process in which each unit performs the foregoing corresponding steps has been described in detail in the foregoing method embodiments. For brevity, details are not described herein again.

It should be further understood that, the apparatus 500 is embodied in a form of a functional unit. The term "unit" herein may refer to an application-specific integrated circuit (application-specific integrated circuit, ASIC), an electronic circuit, a processor (for example, a shared processor, a dedicated processor, or a group processor) and a memory that are configured to execute one or more software or firmware programs, a combined logic circuit, and/or another suitable component that supports the described functions. In an optional example, a person skilled in the art may understand that, the apparatus 500 may be specifically the terminal device in the foregoing embodiments, and may be configured to perform procedures and/or steps corresponding to the terminal device in the foregoing method embodiments, or the apparatus 500 may be specifically the network device in the foregoing embodiments, may be configured to perform procedures and/or steps corresponding to the network device in the foregoing method embodiments. To avoid repetition, details are not described herein again.

The apparatus 500 in the foregoing solutions has a function of implementing corresponding steps performed by the terminal device in the foregoing methods, or the apparatus 500 in the foregoing solutions has a function of implementing corresponding steps performed by the network device in the foregoing methods. The function may be implemented by hardware, or may be implemented by hardware executing corresponding software. The hardware or the software includes one or more modules corresponding to the foregoing functions. For example, the transceiver unit may be replaced with a transceiver (for example, a sending unit in the transceiver unit may be replaced with a transmitter, and a receiving unit in the transceiver unit may be replaced with a receiver), and another unit, for example, the processing unit may be replaced with a processor, to separately perform receiving and sending operations and related processing operations in the method embodiments.

In addition, the transceiver unit 510 may alternatively be a transceiver circuit (for example, may include a receiver circuit and a transmitter circuit), and the processing unit may be a processing circuit.

It should be noted that, the apparatus in FIG. 7 may be a network element or a device in the foregoing embodiments, or may be a chip or a chip system, for example, a system-on-chip (system-on-chip, SoC). The transceiver unit may be an input/output circuit or a communication interface. The processing unit is a processor, a microprocessor, or an integrated circuit integrated on the chip. This is not limited herein.

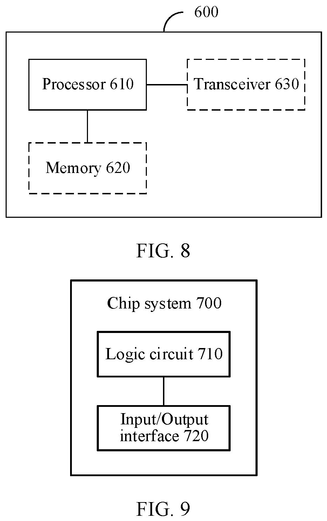

FIG. 8 is a diagram of another communication apparatus 600 according to an embodiment of this application. The apparatus 600 includes a processor 610. The processor 610 is coupled to a memory 620. The memory 620 is configured to store a computer program or instructions and/or data. The processor 610 is configured to: execute the computer program or the instructions stored in the memory 620, or read data stored in the memory 620, to perform the method in the foregoing method embodiments.

Optionally, there are one or more processors 610.

Optionally, there are one or more memories 620.

Optionally, the memory 620 and the processor 610 are integrated together, or are disposed separately.

Optionally, as shown in FIG. 8, the apparatus 600 further includes a transceiver 1030. The transceiver 1030 is configured to receive and/or send a signal. For example, the processor 610 is configured to control the transceiver 1030 to receive and/or send a signal.

In a solution, the apparatus 600 is configured to implement operations performed by a terminal device in the foregoing method embodiments.

For example, the processor 610 is configured to execute the computer program or the instructions stored in the memory 620, to implement related operations of the terminal device in the foregoing method embodiments, for example, the method performed by the terminal device in the embodiment shown in FIG. 2, FIG. 3, or FIG. 4.

In a solution, the apparatus 600 is configured to implement operations performed by the network device in the foregoing method embodiments.

For example, the processor 610 is configured to execute the computer program or the instructions stored in the memory 620, to implement related operations of the network device in the foregoing method embodiments, for example, the method performed by the network device in the embodiment shown in FIG. 2, FIG. 3, or FIG. 4.

It should be understood that, the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor, or the like.

It should be further understood that, the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM can be used as an external cache. By way of example but not limitation, the RAM includes the following plurality of forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that, when the processor is a general-purpose processor, a DSP, an ASIC, an FPGA or another programmable logic device, a discrete gate or a transistor logic device, or a discrete hardware component, the memory (storage module) may be integrated into the processor.

It should be further noted that, the memory described in this specification aims to include but is not limited to these memories and any memory of another proper type.

FIG. 9 is a diagram of a chip system 700 according to an embodiment of this application. The chip system 700 (or may also be referred to as a processing system) includes a logic circuit 710 and an input/output interface (input/output interface) 720.

The logic circuit 710 may be a processing circuit in the chip system 700. The logic circuit 710 may be coupled to and connected to a storage unit, and invoke instructions in the storage unit, so that the chip system 700 can implement methods and functions in embodiments of this application. The input/output interface 720 may be an input/output circuit in the chip system 700, and outputs information processed by the chip system 700, or inputs to-be-processed data or signaling information into the chip system 700 for processing.

Specifically, for example, if the chip system 700 is installed in a terminal device, the logic circuit 710 is coupled to the input/output interface 720, and the logic circuit 710 may discover a message from a network device via the input/output interface 720. The message may be generated by the logic circuit 710. Alternatively, the input/output interface 720 may input first information from the network device into the logic circuit 710 for processing. For another example, if the chip system 700 is installed in the network device, the logic circuit 710 is coupled to the input/output interface 720, and the logic circuit 710 may send the first information to the terminal device via the input/output interface 720. The first information may be generated by the logic circuit 710. Alternatively, the input/output interface 720 may input a message from the terminal device into the logic circuit 710 for processing.

In a solution, the chip system 700 is configured to implement operations performed by the terminal device in the foregoing method embodiments.

For example, the logic circuit 710 is configured to implement processing-related operations performed by the terminal device in the foregoing method embodiments, for example, processing-related operations performed by the terminal device in the embodiment shown in FIG. 2, FIG. 3, or FIG. 4. The input/output interface 720 is configured to implement sending and/or receiving-related operations performed by the terminal device in the foregoing method embodiments, for example, sending and/or receiving-related operations performed by the terminal device in the embodiment shown in FIG. 2, FIG. 3, or FIG. 4.

In another solution, the chip system 700 is configured to implement operations performed by the network device in the foregoing method embodiments.

For example, the logic circuit 710 is configured to implement processing-related operations performed by the network device in the foregoing method embodiments, for example, processing-related operations performed by the network device in the embodiment shown in FIG. 2, FIG. 3, or FIG. 4. The input/output interface 720 is configured to implement sending and/or receiving-related operations performed by the network device in the foregoing method embodiments, for example, sending and/or receiving-related operations performed by the network device in the embodiment shown in FIG. 2, FIG. 3, or FIG. 4.

Embodiments of this application further provide a computer-readable storage medium, where the computer-readable storage medium stores computer instructions used to implement the method performed by the terminal device and the network device in the foregoing method embodiments. For example, when the computer program is executed by a computer, the computer is enabled to implement the method performed by the terminal device or the network device in the foregoing method embodiments.

Embodiments of this application further provide a computer program product, including instructions. When the instructions are executed by a computer, the method performed by the terminal device or the network device in the foregoing method embodiments is implemented.

Embodiments of this application further provide a communication system. The communication system includes the terminal device and the network device in the foregoing embodiments. For example, the system includes the terminal device and the network device in the embodiment shown in FIG. 2, FIG. 3, or FIG. 4.

For explanations and beneficial effect of related content of any one of the apparatuses provided above, refer to the corresponding method embodiment provided above. Details are not described herein again.

In the several embodiments provided in this application, it should be understood that, the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

All or some of the foregoing embodiments may be implemented by using software, hardware, firmware, or any combination thereof. When software is used to implement embodiments, all or a part of embodiments may be implemented in a form of a computer program product. The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. For example, the foregoing usable medium includes but is not limited to any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, performed by a terminal device, comprising:
receiving first information from a network device in a first frequency unit, wherein the first information indicates a first periodicity in which common information is transmitted; and
detecting the common information in a second frequency unit based on the first periodicity.

2. The method according to claim 1, wherein
the common information is for initial access to the network device.

3. The method according to claim 1 or 2, wherein
duration of the first periodicity is greater than 20 ms.

4. The method according to any one of claims 1 to 3, wherein the first information further indicates a time window corresponding to the first periodicity, and the detecting the common information in a second frequency unit based on the first periodicity comprises: detecting the common information in the second frequency unit based on the first periodicity in the time window corresponding to the first periodicity.

5. The method according to any one of claims 1 to 4, wherein the first information further indicates an identifier of the second frequency unit; and the detecting the common information in a second frequency unit based on the first periodicity comprises: detecting the common information in the second frequency unit based on the identifier of the second frequency unit and the first periodicity.

6. The method according to any one of claims 1 to 5, wherein
the first information further indicates a second periodicity in which the common information is transmitted.

7. The method according to claim 6, wherein the method further comprises:
detecting the common information in the second frequency unit based on the second periodicity if the common information is not detected based on the first periodicity.

8. A communication method, performed by a network device, comprising:
sending first information to a terminal device in a first frequency unit, wherein the first information indicates a first periodicity in which common information is transmitted; and
sending the common information in a second frequency unit based on the first periodicity.

9. The method according to claim 8, wherein
the common information is used by the terminal device for initial access to the network device.

10. The method according to claim 8 or 9, wherein
duration of the first periodicity is greater than 20 ms.

11. The method according to any one of claims 8 to 10, wherein
the first information further indicates at least one of the following: a time window corresponding to the first periodicity and an identifier of the second frequency unit.

12. The method according to any one of claims 8 to 11, wherein
the first information further indicates a second periodicity in which the common information is transmitted.

13. A communication method, performed by a terminal device, comprising:
determining a third periodicity from at least two periodicities, wherein the at least two periodicities are transmission periodicities of common information; and
detecting the common information in a third frequency unit based on the third periodicity.

14. The method according to claim 13, wherein
each of the at least two periodicities is a transmission periodicity of the common information in the third frequency unit; or the at least two periodicities comprise a transmission periodicity of the common information in the third frequency unit and a transmission periodicity of the common information in a fourth frequency unit.

15. The method according to claim 13 or 14, wherein
the common information is for initial access to a network device.

16. The method according to any one of claims 13 to 15, wherein
duration of the third periodicity is greater than 20 ms.

17. The method according to any one of claims 13 to 16, wherein the detecting the common information in a third frequency unit based on the third periodicity comprises: detecting the common information in the third frequency unit based on the third periodicity in a time window corresponding to the third periodicity.

18. The method according to any one of claims 13 to 17, wherein the detecting the common information in a third frequency unit based on the third periodicity comprises: detecting the common information in the third frequency unit based on an identifier of the third frequency unit and the third periodicity.

19. The method according to any one of claims 13 to 18, wherein
the at least two periodicities further comprise a fourth periodicity, and the fourth periodicity is for detecting the common information in the third frequency unit.

20. The method according to claim 19, wherein the method further comprises:
detecting the common information in the third frequency unit based on the fourth periodicity if the common information is not detected in the third frequency unit based on the third periodicity.

21. A communication method, performed by a network device, comprising:
determining a third periodicity from at least two periodicities, wherein the at least two periodicities are transmission periodicities of common information; and
sending the common information to a terminal device in a third frequency unit based on the third periodicity.

22. The method according to claim 21, wherein
each of the at least two periodicities is a transmission periodicity of the common information in the third frequency unit; or the at least two periodicities comprise a transmission periodicity of the common information in the third frequency unit and a transmission periodicity of the common information in a fourth frequency unit.

23. The method according to claim 21 or 22, wherein
the common information is used by the terminal device for initial access to the network device.

24. The method according to any one of claims 21 to 23, wherein
duration of the third periodicity is greater than 20 ms.

25. The method according to any one of claims 21 to 24, wherein the sending the common information to a terminal device in a third frequency unit based on the third periodicity comprises: sending the common information to the terminal device in the third frequency unit based on the third periodicity in a time window corresponding to the third periodicity.

26. The method according to any one of claims 21 to 24, wherein the sending the common information to a terminal device in a third frequency unit based on the third periodicity comprises: sending the common information to the terminal device in the third frequency unit based on an identifier of the third frequency unit and the third periodicity.

27. The method according to any one of claims 21 to 26, wherein
the at least two periodicities further comprise a fourth periodicity, and the fourth periodicity is for sending the common information in the third frequency unit.

28. A communication method, comprising:
sending, by a network device, first information to a terminal device in a first frequency unit, wherein the first information indicates a first periodicity in which common information is transmitted;
receiving, by the terminal device, the first information;
sending, by the network device, the common information in a second frequency unit based on the first periodicity; and
detecting, by the terminal device, the common information in the second frequency unit based on the first periodicity.

29. The method according to claim 28, wherein
the common information is for initial access to the network device.

30. The method according to claim 28 or 29, wherein
duration of the first periodicity is greater than 20 ms.

31. The method according to any one of claims 28 to 30, wherein the first information further indicates a time window corresponding to the first periodicity, and
the detecting, by the terminal device, the common information in the second frequency unit based on the first periodicity comprises: detecting, by the terminal device, the common information in the second frequency unit based on the first periodicity in the time window corresponding to the first periodicity.

32. The method according to any one of claims 28 to 31, wherein the first information further indicates an identifier of the second frequency unit; and
the detecting, by the terminal device, the common information in the second frequency unit based on the first periodicity comprises: detecting, by the terminal device, the common information in the second frequency unit based on the identifier of the second frequency unit and the first periodicity.

33. The method according to any one of claims 28 to 32, wherein
the first information further indicates a second periodicity in which the common information is transmitted.

34. The method according to claim 33, wherein the method further comprises:
detecting, by the terminal device, the common information in the second frequency unit based on the second periodicity if the common information is not detected by the terminal device based on the first periodicity.

35. A communication method, comprising:
determining, by a terminal device and a network device, a third periodicity from at least two periodicities, wherein the at least two periodicities are transmission periodicities of common information;
sending, by the network device, the common information to the terminal device in a third frequency unit based on the third periodicity; and
detecting, by the terminal device, the common information in the third frequency unit based on the third periodicity.

36. The method according to claim 35, wherein
each of the at least two periodicities is a transmission periodicity of the common information in the third frequency unit; or the at least two periodicities comprise a transmission periodicity of the common information in the third frequency unit and a transmission periodicity of the common information in a fourth frequency unit.

37. The method according to claim 35 or 36, wherein
the common information is used by the terminal device for initial access to the network device.

38. The method according to any one of claims 35 to 37, wherein
duration of the third periodicity is greater than 20 ms.

39. The method according to any one of claims 35 to 38, wherein the sending, by the network device, the common information to the terminal device in a third frequency unit based on the third periodicity, and detecting, by the terminal device, the common information in the third frequency unit based on the third periodicity comprises:
sending, by the network device, the common information to the terminal device in the third frequency unit based on the third periodicity in a time window corresponding to the third periodicity, and detecting, by the terminal device, the common information in the third frequency unit based on the third periodicity in the time window corresponding to the third periodicity.

40. The method according to any one of claims 35 to 39, wherein the sending, by the network device, the common information to the terminal device in a third frequency unit based on the third periodicity, and detecting, by the terminal device, the common information in the third frequency unit based on the third periodicity comprises:
sending, by the network device, the common information to the terminal device in the third frequency unit based on an identifier of the third frequency unit and the third periodicity, and detecting, by the network device, the common information in the third frequency unit based on the identifier of the third frequency unit and the third periodicity.

41. The method according to any one of claims 35 to 40, wherein
the at least two periodicities further comprise a fourth periodicity, and the fourth periodicity is used by the network device to send the common information in the third frequency unit, and used by the terminal device to detect the common information in the third frequency unit.

42. The method according to claim 41, wherein the method further comprises:
detecting, by the terminal device, the common information in the third frequency unit based on the fourth periodicity if the common information is not detected by the terminal device in the third frequency unit based on the third periodicity.

43. A communication apparatus, comprising a unit that has a function of implementing the method according to any one of claims 1 to 7, the method according to any one of claims 8 to 12, the method according to any one of claims 13 to 20, or the method according to any one of claims 21 to 27.

44. A communication apparatus, comprising:
a processor, configured to execute a computer program stored in a memory, to enable the apparatus to perform the method according to any one of claims 1 to 7, or to enable the apparatus to perform the method according to any one of claims 8 to 12.

45. A communication apparatus, comprising:
a processor, configured to execute a computer program stored in a memory, to enable the apparatus to perform the method according to any one of claims 13 to 20, or to enable the apparatus to perform the method according to any one of claims 21 to 27.

46. A computer-readable storage medium, wherein a computer program is stored on the computer-readable storage medium; and when the computer program is run on a computer, the computer is enabled to perform the method according to any one of claims 1 to 7, the computer is enabled to perform the method according to any one of claims 8 to 12, the computer is enabled to perform the method according to any one of claims 13 to 20, or the computer is enabled to perform the method according to any one of claims 21 to 27.

47. A computer program product, wherein the computer program product comprises instructions for performing the method according to any one of claims 1 to 7, the computer program product comprises instructions for performing the method according to any one of claims 8 to 12, the computer program product comprises instructions for performing the method according to any one of claims 13 to 20, or the computer program product comprises instructions for performing the method according to any one of claims 21 to 27.

48. A communication system, comprising a terminal device and a network device, wherein the terminal device is configured to perform the method according to any one of claims 1 to 7, and the network device is configured to perform the method according to any one of claims 8 to 12; or the terminal device is configured to perform the method according to any one of claims 13 to 20, and the network device is configured to perform the method according to any one of claims 21 to 27.

49. A communication apparatus, wherein the communication apparatus is configured to perform the method according to any one of claims 1 to 7.

50. A communication apparatus, wherein the communication apparatus is configured to perform the method according to any one of claims 8 to 12.

51. A communication apparatus, wherein the communication apparatus is configured to perform the method according to any one of claims 13 to 20.

52. A communication apparatus, wherein the communication apparatus is configured to perform the method according to any one of claims 21 to 27.
